# EUROPÄISCHE PATENTSCHRIFT

(11) **EP 0 527 284 B1**
(45) Veröffentlichungstag und Bekanntmachung des Hinweises auf die Patenterteilung: **18.09.1996**
(21) Anmeldenummer: 91810631.1
(22) Anmeldetag: 12.08.1991
(51) Int. Cl.: G03B 27/62

(54) **Führungsvorrichtung für Kopiervorlagen**
Guiding device for originals
Dispositif de guidage pour originaux

(43) Veröffentlichungstag der Anmeldung: 17.02.1993
(73) Patentinhaber: GRETAG IMAGING AG, CH-8105 Regensdorf (CH)
(72) Erfinder: Frick, Beat, Dr., CH-8107 Buchs (CH); Koch, Wilhelm Heinrich, CH-8112 Otelfingen (CH)
(74) Vertreter: Kleewein, Walter, Dr.

(56) Entgegenhaltungen:
- EP-A- 0 331 048
- DE-A- 2 246 066
- US-A- 1 383 357
- US-A- 3 658 223

## Beschreibung

Die Erfindung betrifft eine Führungsvorrichtung für Kopiervorlagen gemäss Oberbegriff von Patentanspruch 1.

Derartige Führungsvorrichtungen sind insbesondere bei der automatischen Verarbeitung von fotografischen Kopiervorlagen in Printern bereits im Einsatz. In solchen Printern werden üblicherweise die in Form von einzelnen Positiv- oder Negativfilmstreifen vorliegenden Kopiervorlagen zunächst zu einem langen Filmband verspleisst. Dieses Filmband wird dann einer einer Messstation zugeführt, in der es ausgemessen wird. Nach der Ausmessung werden die erforderlichen Kopierlichtmengen ermittelt und anschliessend die gewünschten Bildfelder des Filmbands auf lichtempfindliches fotografisches Kopiermaterial, z.B. Fotopapier, aufkopiert.

Auf den zu einem Filmband zusammengespleissten Filmstreifen sind bei handelsüblichen Filmen in der Seitenrandzone der einzelnen Filmstreifen Informationen über das zugehörige Bildfeld, über den Filmtyp etc., vorhanden, die beispielsweise bei der Ermittlung der erforderlichen Kopierlichtmengen berücksichtigt werden können. Üblicherweise ist der sogenannte DX-Code aufgebracht. Er enthält Informationen über Filmfabrikat, Filmtyp und bei manchen Herstellern auch Informationen über die Bildnummer. Diese Informationen liegen meist in Form eines ein- oder mehrspurigen Barcodes vor, der in Filmlängsrichtung in der Seitenrandzone des Filmstreifens auf einem Seitenrand des Filmstreifens aufgebracht ist. Weiterhin ist je nach Hersteller bisweilen auch die Bildfeldnummer in Form eines Barcodes dort aufgebracht. Solche Barcodes umfassen bei handelsüblichen Filmen beispielsweise zwei Spuren, eine Daten- und eine Taktspur, die rein äusserlich aus gleichartigen Elementen (Bars) gebildet sind. Allerdings haben sie eine unterschiedliche Funktion und eine unterschiedliche Zusammensetzung der einzelnen Elemente (Bars). So wird mit Hilfe der Taktspur der Messtakt erzeugt, mit dem die zumeist codierten Daten der Datenspur gelesen werden, während die Datenspur die eigentliche Information (Daten) in codierter Form enthält.

Zur Erzeugung des Takts wird dabei üblicherweise die Taktspur mit z.B. rotem Licht, beispielsweise mit Hilfe von Rotlicht-LED's, beaufschlagt und jenseits des Films das transmittierte Licht empfangen, z.B. mittels einer Fotodiode, die das empfangene optische Signal in ein elektrisches wandelt. Mit Hilfe der transparenten und nichttransparenten Elementen (Bars) in der Taktspur wird so der Takt erzeugt, mit dessen Hilfe auf die gleiche Art und Weise (Beleuchtung der Datenspur, Messung des empfangenen Lichts jenseits des Films) die Daten der Datenspur gelesen werden. Diese Daten stehen dann als Eingangsdaten zur Decodierung bereit.

Eine fotografischer Printer, der in dieser Art und Weise den DX-Code detektiert und verarbeitet, ist beispielsweise aus der EP-A-0 331 048 bekannt. Der dort beschriebene fotografische Printer weist eine Führungseinrichtung für die Kopiervorlage auf. Der DX-Code auf dem Seitenrand des Films wird bei dieser Vorrichtung in der oben beschriebenen Art und Weise detektiert und die im DX-Code enthaltene und detektierte Information anschliessend weiterverarbeitet.

Innerhalb der Messstation eines solchen Printers ist eine definierte seitliche Führung des Films erforderlich, da bei der Ausmessung der Bildfelder des Films eine definierte Position des jeweiligen auszumessenden Bildfelds erforderlich ist, um den Messvorgang durchführen zu können. Gleiches gilt für das Lesen der Daten in der Seitenrandzone des Filmstreifens. Dazu wird in bekannten Geräten der Filmstreifen bzw. das Filmband durch Führungselemente längs einer definierten Bahn "gezwungen". Diese Führungselemente umfassen zwei ortsfest angeordnete Seitenwände, die in etwa senkrecht zur Transportebene des Filmbands verlaufen und parallel zur Transportrichtung angeordnet sind. Zwischen diesen Seitenwänden wird das Filmband an seinen Seitenkanten geführt. Um den Bar-Code (DX-Code) in der Seitenrandzone des Filmbands lesen zu können, sind Detektionsmittel vorgesehen (z.B. LED's und Fotodioden, wie oben erläutert).

Diese Art der Führung (auch "harte" Führung genannt) ist an sich brauchbar, weist jedoch noch einige Mängel auf. So kann diese Art der Führung beispielweise nicht auf Schwankungen der Breite des zu verarbeitenden Filmbands reagieren. Solche Schwankungen der Breite können beispielsweise herstellungsbedingt sein (Übermass bzw. Untermass der einzelnen Filmstreifen). Sie können ihre Ursache auch darin haben, dass vor der Ausmessung mehrere Filmstreifen zu einem langen Filmband zusammengespleisst werden. Dabei können Überbreiten beispielsweise durch die Überbreite des Spleisses selbst bedingt sein, sie können aber auch durch Ungenauigkeiten beim Verspleissen der Filmstreifen entstehen. Beispielsweise können zwei zu verspleissende Filmstreifen leicht seitlich versetzt zueinander verspleisst werden oder sie können unter einem kleinen Versatzwinkel miteinander verspleisst werden. In beiden Fällen hat dies Schwankungen der Breite des durch die Verspleissung entstehenden Filmbands zur Folge.

Dieses Filmband wird in der Messtation durch die oben beschriebene "harte" Führung gezwungen. Somit kann es im Falle von Überbreite (welche Ursache sie auch haben) des Filmbands zu Schwierigkeiten bei dessen Transport kommen, die durch erhöhte Reibung der Seitenkanten des Filmbands an den Seitenwänden, die es führen, bedingt sind. Dies kann einerseits eine erhöhte Abnutzung der Seitenwände durch die reibende Filmbandkante zur Folge haben, kann aber andererseits auch zu Beschädigungen des Filmbands führen. Ausserdem können durch die Hemmungen beim Transport erhebliche Gleichlaufschwankungen bei der Verarbeitung auftreten, die untolerierbar sind. Obendrein kann sich das Filmband in solchen Bereichen von Überbreite verbiegen, so dass ein Lesen des DX-Codes bzw. eine Ausmessung der einzelnen Bildfelder schwierig oder überhaupt nicht mehr möglich ist.

Aus der US-A-1,383,357 ist eine Filmkamera für Kinofilme bekannt, bei der Führungselemente vorgesehen sind, die parallel zur Transportrichtung des Films angeordnet sind und zwischen denen der Film geführt wird. Diese Führungselemente sind seitlich verstellbar ausgebildet, um Filme unterschiedlicher Filmbreite verarbeiten zu können.

Ausgehend von diesem Stand der Technik ist es daher eine Aufgabe der Erfindung, eine Führung für einen fotografischen Printer vorzuschlagen, bei der die obengenannten Nachteile beseitigt sind, die also insbesondere bei Schwankungen der Breite des Filmbands jederzeit eine problemlose Führung des Filmbands ermögficht. Gleichzeitig soll auch der DX-Code in der Seitenrandzone des Filmbands einwandfrei lesbar sein. Die Kopiervorlage soll darüberhinaus definiert geführt sein, und die Führung soll von ihrem konstruktiven Aufwand her einfach und in ihrer Funktion zuverlässig sein.

Diese Aufgabe wird durch die Merkmale des Patentanspruchs 1 gelöst. Besonders vorteilhafte Weiterbildungen ergeben sich aus den Merkmalen der abhängigen Ansprüche.

Im folgenden wird die Erfindung anhand der Zeichnung näher erläutert, Es zeigen schematisch:
- Fig. 1: ein Ausführungsbeispiel der erfindungsgemässen Führungsvorrichtung in perspetkivischer Darstellung,
- Fig. 2: eine Aufsicht auf das Ausführungsbeispiel der Fig. 1
und
- Fig. 3: ein weiteres Ausführungsbeispiel der erfindungsgemässen Vorrichtung.

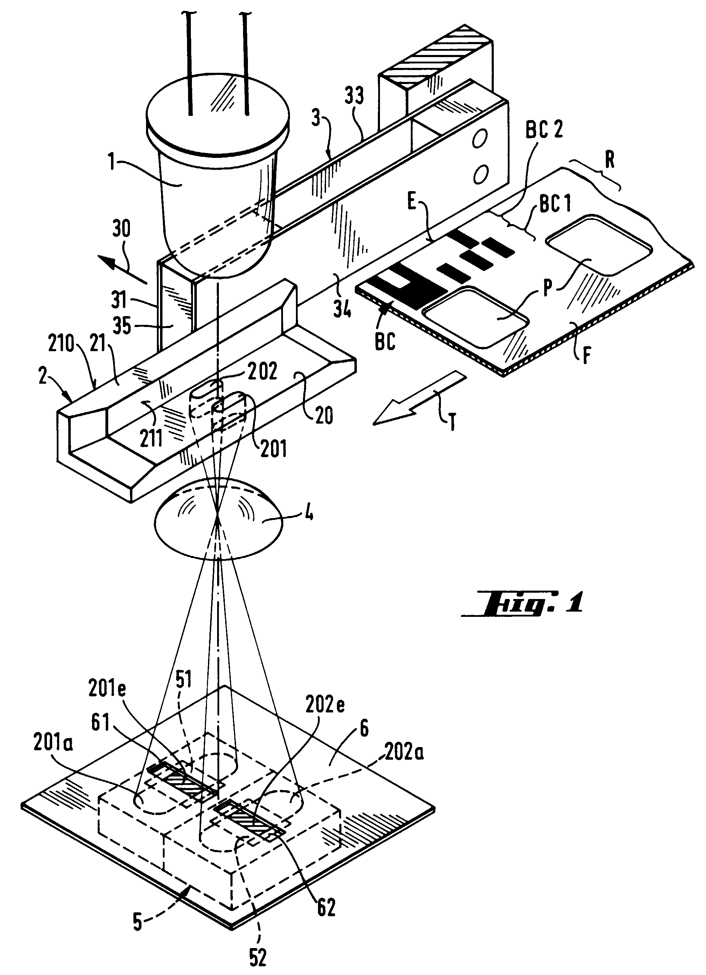

Das in Fig. 1 gezeigte Ausführungsbeispiel der erfindungsgemässen Vorrichtung umfasst im wesentlichen eine Lichtquelle in Form einer Leuchtdiode 1, Führungselemente 2, die mit einer Blattfeder 3 verbunden sind und die Kopiervorlage F führen, wobei von den Führungslementen aus zeichnerischen Gründen in Fig. 1 nur ein Element dargestellt ist, sowie optische Mittel in Form einer Abbildungsoptik 4, die das durch die Kopiervorlage F transmittierte Licht zu einem Empfänger 5 führen, in dessen Nähe im Lichtweg eine Blende 6 angeordnet ist

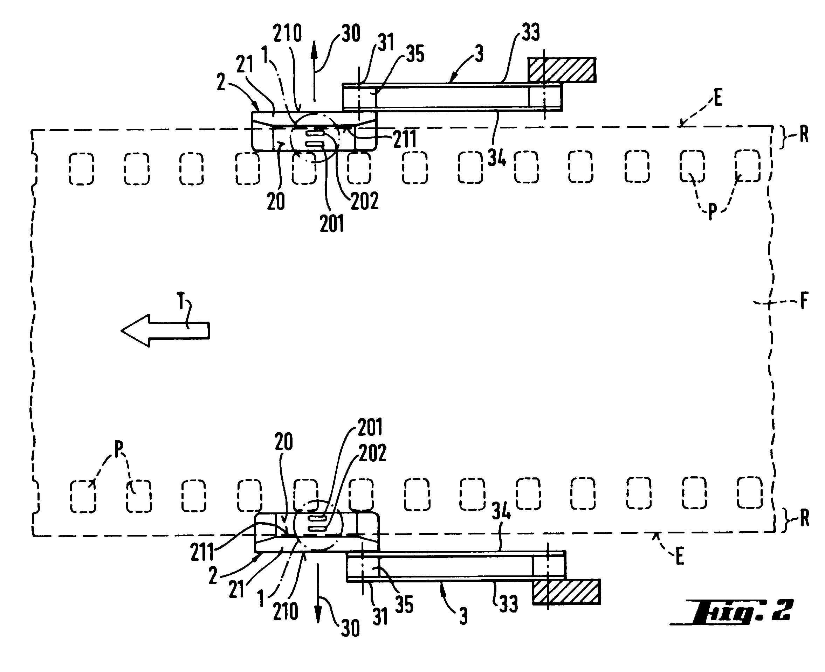

Die Kopiervorlage, die in der folgenden Erläuterung stets durch einen Film bzw. ein Filmband F mit Seitenrandperforation P repräsentiert wird, wird gemäss dem Pfeil T in Fig. 1 mit Hilfe von nicht dargestellten Transportmitteln, beispielsweise mit Hilfe von hierfür üblichen Transportwalzen, transportiert. Der Film F gelangt im weiteren Transportverlauf zu zwei Führungselementen 2 (Fig. 2), von denen in Fig. 1 aus zeichnerischen Gründen nur eines dargestellt ist Diese Führungselemente 2 umfassen jeweils eine Auflagefläche 20 und eine Seitenwand 21, an deren Aussenfläche 210 sie mit dem freien Ende der am anderen Ende ortsfest eingespannten Blattfeder 3 verbunden sind. Die Innenfläche 211 der Seitenwand 21 führt die jeweilige Seitenkante E des Films F.

Wie man in Fig. 1 erkennen kann, ist auf dem Seitenrand R des Films F ein zweispuriger Bar-Code BC aufgebracht (DX-Code). Die innere Spur BC1 dient dabei zur Erzeugung des Lesetakts für die Informationen (Daten), die in der äusseren Spur BC2 enthalten sind. Gelangt nun der Film F in den Bereich der Führungselemente 2, so wird der Seitenrand R von der Leuchtdiode 1 mit Licht beaufschlagt. In den transparenten (hellen) Bereichen der einzelnen Spuren BC1 bzw. BC2 kann das Licht durch den Film F hindurchdringen, in den intransparenten (dunklen) Bereichen hingegen nicht Das durch den Seitenrand R transmittierte Licht gelangt durch ein für jede Spur BC1 bzw. BC2 in der Auflagefläche 20 des Führungselements 2 separat vorgesehenes Langloch 201 bzw. 202, das als Blendenloch wirkt. Im weiteren Lichtweg ist eine Abbildungsoptik 4 angeordnet, die das durch die Langlöcher 201 und 202 hindurchgetretene Licht zum Empfänger 5 führen. Nahe dem Empfänger 5 ist im Lichtweg eine weitere Blende 6 angeordnet, die mit zwei Blendenschlitzen 61 und 62 versehen ist. Die Blendenschlitze 61 und 62 sind dabei koaxial zueinander angeordnet und verlaufen jeweils quer zur Abbildung 201a bzw. 202a des jeweiligen Langlochs 201 bzw. 202 (Prinzipiell könnte auch nur ein einziger durchgehender Schlitz anstelle der zwei koaxial zueinander angeordneten Schlitzen 61 und 62 vorgesehen sein). Auf diese Weise blenden die Schlitze 61 und 62 jeweils den schraffierten Bereich 201e bzw. 202e aus der Abbildung 201a bzw. 202a aus. Das Licht, das die Bereiche 201e und 202e beaufschlagt, kann die Schlitze 61 und 62 durchdringen und die aktiven Flächen 51 und 52 des Empfängers 5 beaufschlagen. Beispielsweise kann der Empfänger durch einzelne Fotodioden oder durch ein Fotodiodenarray realisiert sein.

In der Aufsicht in Fig. 2 erkennt man, wie der dort gestrichelt dargestellte Film F mit Hilfe der Führungselemente 2 an seinen Seitenkanten E geführt ist. Wenn nun Schwankungen der Breite des Films F auftreten, so drücken die Seitenkanten E des Films F stärker gegen die Innenwände 211 der Seitenwände 21 der Führungselemente 2. Dadurch wird das jeweils bewegliche Ende 31 der Blattfeder 3, an dem die Führungselemente 2 befestigt sind, in Richtung des Pfeils 30 seitlich zur Transportrichtung T in der Vorlagenebene nach aussen gedrückt. Damit die Innenwände 211 der Seitenwände 21 trotz dieses seitlichen Versatzes stets parallel zur Transportrichtung verlaufen und die Seitenkanten des Films F führen können, ist die Blattfeder 3 durch zwei Federblätter 33 und 34 gebildet, zwischen denen am beweglichen Ende 31 ein quaderartiger Stützkörper 35 vorgesehen ist, der dies gewährleistet. Da der Abstand der Barcodespuren BC1 und BC2 in Bezug auf die Seitenkante E des Films F stets in etwa konstant bleibt, müssen die Langlöcher 201 bzw. 202 in Bezug auf die Seitenkante E des Films F ebenfalls den gleichen Abstand zur Seitenkante E beibehalten, damit der Seitenrand R des Films weiterhin nur im Bereich der Spuren BC1 und BC2 vom Licht durchdrungen werden kann. Dies wird durch die seitliche Bewegbarkeit der Führungselemente 2, wie sie beispielhaft beschrieben ist, erreicht. Der Durchmesser der Leuchtdiode 1 (Fig. 1) bzw. deren Lichtspur, die den Seitenrand R des Films F beaufschlagt, ist dabei so gross im Verhältnis zur Breite und zum Abstand der beiden Barcodespuren BC1 und BC2 voneinander, sodass auch für den Fall, dass die Barcodespuren BC1 und BC2 ebenfalls eine Abweichung in seitlicher Richtung aufweisen (z.B. zusammen mit der Schwankung der Filmbreite), der DX-Code einwandfrei beleuchtet wird und detektiert werden kann. Beispielsweise beträgt allein der Durchmesser der Leuchtdiode 1 bereits 5 mm, hingegen sind die beiden Barcodespuren BC1 und BC2 nur 1.28 mm voneinander entfernt und weisen eine Spurbreite von etwa 0.5 mm auf. Ebenfalls ist natürlich die Blende 6 (bzw. deren Schlitze 61 und 62) und der Empfänger 5 (bzw. dessen aktive Flächen 5q und 52) so bemessen, dass bei solchen seitlichen Schwankungen das durch die Langlöcher 201 und 202 transmittierte Licht einwandfrei detektiert werden kann und so der DX-Code sicher gelesen werden kann. Durch die Anordnung von Führungselementen 2 an beiden Seitenkanten E des Films F wird erreicht, dass man auch nach Umspulungen des Filmbands von einer Spule auf eine andere, wie es in der Praxis in Fotolabors häufig vorkommt, nicht besorgt sein muss, ob der zu lesende Barcode nun gerade auf dem rechten oder linken Seitenrand R des Filmbands F aufgebracht ist. Auf diese Weise wird der Barcode BC auf jeden Fall erkannt und gelesen.

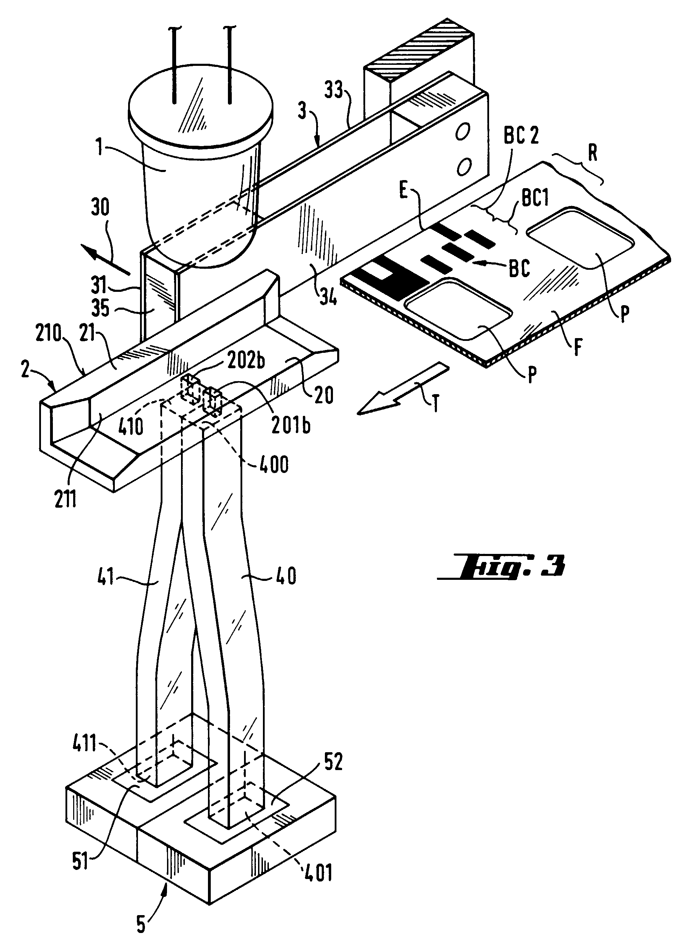

In dem in Fig. 3 gezeigten weiteren Ausführungsbeispiel der Führungsvorrichtung sind die optischen Mittel, die das durch den Film F transmittierte Licht zum Empfänger 4 führen, durch Lichtleiter, insbesondere durch Lichtleitfasern oder Lichtleitfaserbündel 40 und 41 gebildet. In diesem Ausführungsbeispiel sind die Blendenlöcher, die bei dem bereits beschriebenen Ausführungsbeispiel als Langlöcher 201 und 202 ausgebildet waren, durch zwei schmale Schlitze 201b und 202b ersetzt, die das von der Leuchtdiode 1 emittierte Licht lediglich auf ein einziges Element ("Bar") der jeweiligen Spur BC1 bzw. BC2 des Barcodes durchlassen. Nach der mehr oder weniger starken Transmission durch diesen Bereich des Films F (je nachdem, ob ein dunkles oder ein helles Element der Barcodespur BC1 bzw. BC2 beaufschlagt wurde) tritt das transmittierte Licht in die lichtaufnehmenden Enden 400 bzw. 410 der Lichtleitfaserbündel 40 bzw. 41 ein. Das Licht tritt anschliessend aus den lichtabgebenden Enden 401 bzw. 411 aus, die in unmittelbarer Nähe des Empfängers 4 angeordnet sind, so dass das Licht direkt die aktiven Flächen 51 bzw. 52 des Fotoempfängers 5 beaufschlagen kann. Bei dieser Vorrichtung ist es nun so, dass das Licht, das durch den Schlitz 202b hindurch gelangt, die Empfängerfläche 51 beaufschlagt und das durch den Schlitz 201b hindurch gelangte Licht die Empfängerfläche 52 beaufschlagt (im Unterschied zur in Fig. 1 dargestellten Vorrichtung). Die Lichtleiter in Form der Lichtleitfaserbündel 40 und 41 sind so bemessen, dass bei Schwankungen der Filmbreite das durch die Schlitze 201b und 202b gelangte Licht sicher in die Lichtleitfaserbündel 40 und 41 eintritt. Selbstverständlich könnte das von der Leuchtdiode 1 emittierte Licht auch mit Hilfe von Lichtleitfasern bzw. Lichtleitfaserbündeln zum Film F geführt werden, wodurch der Film F gezielt in dem Bereich des jeweils zu messenden Elements des Barcodes BC beaufschlagt werden kann. In einem praktischen Ausführungsbeispiel der erfindungsgemässen Vorrichtung werden beispielweise für jeden einzelnen Bereich des Barcodes (für jedes einzelne "Bar") jeweils zwei Messwerte bestimmt, um eine grosse Sicherheit beim Lesen der Daten, die in der einen der beiden Spuren BC1 bzw. BC2 codiert enthalten sind, zu gewährleisten.

Selbstverständlich sind weitere Ausführungsvarianten der Führungsvorrichtung denkbar.

Wie bereits erwähnt, ist die Führungsvorrichtung besonders für den Einsatz in fotografischen Printern und automatischen Fotolabors geeignet, in denen Positv- oder Negativfilme oder Filmbänder verarbeitet werden. Selbstverständlich ist sie aber auch geeignet für andere Arten von Kopiervorlagen, insbesondere auch für einzelne Kopiervorlagen, bei denen auf dem Rand der Kopiervorlage Informationen aufgebracht sind, beispielsweise in Form eines Barcodes. Das sichere Lesen des Barcodes ist mit Hilfe dieser Vorrichtung auch bei Schwankungen der Breite der Kopiervorlage gewährleistet. Ausserdem werden untolerierbare Gleichlaufschwankungen bei der Verarbeitung vermieden. Schlussendlich wird auch eine Beschädigung der Kopiervorlage durch Aufwölben (Verformung der Kopiervorlage) bzw. eine erhöhte Abnutzung der Führungs durch Reibung der Kanten der Kopiervorlage vermieden.

## Patentansprüche

1. Führungsvorrichtung für fotografische Kopiervorlagen (F) mit Transportmitteln zum Transport der Kopiervorlage, mit Führungselementen (2), die die Transportebene der Vorlage definieren und die Seitenwände (21) aufweisen, welche im wesentlichen senkrecht zur Transportebene der Vorlage (F) und etwa parallel zur Transportrichtung angeordnet sind und die Kopiervorlage (F) an deren Seitenkanten (E) führen, und mit Detektionsmitteln (1,5) zum Detektieren von nahe der Seitenkanten (E) der Kopiervorlage (F) aufgebrachten Informationen (BC1,BC2), dadurch gekennzeichnet, dass die Seitenwände (21) gegen die Rückstellkraft einer ortsfest eingespannten Blattfeder (3) quer zur Transportrichtung (T) der Vorlage (F) bewegbar sind, wobei die Seitenwände (21) jeweils mit dem freien Ende (31) der Blattfeder (3) verbunden sind und daß die Seitenwände (21) je eine Auflagefläche (20) für den Seitenrand (R) der Kopiervorlage (F) umfassen, wobei jede Auflagefläche (20) mindestens ein Blendenloch (201,202) aufweist, welches einen Teil des durch den Seitenrand (R) der Kopiervorlage (F) transmittierten Licht ausblendet.

2. Führungsvorrichtung nach Anspruch 1, dadurch gekennzeichnet, dass die Detektionsmittel eine Lichtquelle (1) umfassen, die die Seitenränder (R) der Kopiervorlage (F), auf denen die zu detektierenden Informationen (BC1,BC2) aufgebracht sind, mit Licht beaufschlagt, sowie einen auf der anderen Seite der Kopiervorlage (F) angeordneten Empfänger (5) für das durch den Seitenrand (R) und das in der Auflagefläche (20) vorgesehene Blendenloch (201,202) transmittierte Licht.

3. Führungsvorrichtung nach Anspruch 1 oder 2, dadurch gekennzeichnet, dass im Lichtweg an das Blendenloch anschliessend optische Mittel (4) vorgesehen sind, die das durch das Blendenloch (201,202) ausgeblendete Licht zum Empfänger (5) führen.

4. Führungsvorrichtung nach einem der Ansprüche 1 bis 3, dadurch gekennzeichnet, dass das Blendenloch in der Auflagefläche (20) des Führungselements (2) als Langloch (201,202) ausgebildet ist, welches sich im wesentlichen parallel zur Längsrichtung der Seitenwand (21), die die Seitenkante (E) der Kopiervorlage (F) führt, erstreckt, und dass nahe dem Empfänger (5) und im Lichtweg vor dem Empfänger eine weitere Blende (6) angeordnet ist, die mit einem Blendenschlitz (61,62) versehen ist, der sich quer zur Abbildung des Langlochs erstreckt und so einen Teil des von den optischen Mitteln (4) kommenden Lichts ausblendet und auf den Empfänger (5) freigibt.

5. Führungsvorrichtung nach Anspruch 4, dadurch gekennzeichnet, dass zwei parallel zueinander verlaufende Langlöcher (201,202) in der Auflagefläche (20) vorgesehen sind, deren seitlicher Abstand voneinander etwa dem Abstand zweier Spuren (BC1,BC2) entspricht, längs denen die Informationen auf dem Seitenrand (R) der Kopiervorlage (F) aufgebracht sind, und dass die Blende (6) in der Nähe des Empfängers (5) mit zwei Blendenschlitzen (61,62) versehen ist, die koaxial zueinander quer zur Abbildung des jeweiligen Langlochs angeordnet sind.

6. Führungsvorrichtung nach Anspruch 3, dadurch gekennzeichnet, dass die optischen Mittel, die das durch die Kopiervorlage transmittierte Licht zum Empfänger führen, durch einen Lichtleiter, insbesondere durch Lichtleitfasern oder Lichtleitfaserbündel (40,41) gebildet sind, dessen bzw. deren lichtaufnehmendes Ende bzw. Enden (400,410) nahe der Kopiervorlage (F) und dessen bzw. deren lichtabgebendes Ende bzw. Enden (401,411) nahe dem Empfänger (5) angeordnet sind.

## Claims

1. A guide apparatus for photographic copy masters (F), having transport means for transporting the copy master, guide elements (2) that define the transport plane of the copy master and have lateral walls (21) that are arranged essentially perpendicular to the transport plane of the copy master (F) and approximately parallel to the direction of transport and that guide the copy master (F) at its lateral edges (E), and having detection means (1,5) for detecting information (BC1,BC2) applied close to the lateral edges (E) of the copy master (F), wherein the lateral walls (21) are movable transversely to the direction of transport (T) of the copy master (F) against the restoring force of a fixedly mounted plate spring (3), the lateral walls (21) being connected in each case to the free end (31) of the plate spring (3), and wherein each of the lateral walls (21) comprises a support surface (20) for the lateral border (R) of the copy master (F), each support surface (20) having at least one diaphragm hole (201,202) which extracts a portion of the light transmitted through the lateral border (R) of the copy master (F).

2. A guide apparatus according to claim 1, wherein the detection means comprise a light source (1) that directs light onto the lateral borders (R) of the copy master (F) to which the information (BC1,BC2) to be detected is applied, and a receiver (5), located at the other side of the copy master (F), for the light transmitted through the lateral border (R) and the diaphragm hole (201,202) provided in the support surface (20).

3. A guide apparatus according to claim 1 or claim 2, wherein optical means (4) are provided in the light path adjoining the diaphragm hole, which optical means (4) guide the light extracted by the diaphragm hole (201,202) to the receiver (5).

4. A guide apparatus according to any one of claims 1 to 3, wherein the diaphragm hole is formed in the support surface (20) of the guide element (2) as an elongate hole (201,202) that extends essentially parallel to the longitudinal direction of the lateral wall (21) that guides the lateral edge (E) of the copy master (F) and wherein in the vicinity of the receiver (5) and in the light path upstream of the receiver a further diaphragm (6) is arranged that is provided with a diaphragm slot (61,62) that extends transversely to the image of the elongate hole and thus extracts a portion of the light coming from the optical means (4) and allows it through to the receiver (5).

5. A guide apparatus according to claim 4, wherein two elongate holes (201,202) extending parallel to one another are provided in the support surface (20) the lateral separation of which corresponds approximately to the separation of two tracks (BC1,BC2) along which the information on the lateral border (R) of the copy master (F) is applied, and wherein the diaphragm (6) is provided in the vicinity of the receiver (5) with two diaphragm slots (61,62) arranged coaxially with respect to one another transversely to the image of the respective elongate hole.

6. A guide apparatus according to claim 3, wherein the optical means that guide the light transmitted through the copy master to the receiver are formed by a lightguide, especially by light-guiding fibres or light-guiding fibre bundles (40,41), the light-receiving end or ends (400,410) of which is(are) arranged in the vicinity of the copy master (F) and the light-emitting end or ends (401,411) of which is(are) arranged in the vicinity of the receiver (5).

## Revendications

1. Dispositif de guidage pour originaux photographiques à tirer (F) comportant des moyens de transport pour le transport de l'original à tirer, des éléments de guidage (2) qui définissent le plan de transport de l'original et présentent des parois latérales (21) qui sont disposées sensiblement perpendiculairement au plan de transport de l'original (F) et à peu près parallèlement à la direction du transport et guident l'original à tirer (F) par ses extrémités latérales (E), et comportant des moyens de détection (1,5) pour détecter des informations (BC1,BC2) rapportées près des extrémités latérales (E) de l'original à tirer (F), caractérisé par le fait que les parois latérales (21) peuvent se mouvoir, à l'encontre de la force de rappel d'un ressort à lames (3) bridé en un point fixe, transversalement par rapport à la direction de transport (T) de l'original (F), les parois latérales (21) étant respectivement réunies à l'extrémité libre (31) du ressort à lames (3) et que les parois latérales (21) comportent chacune une surface d'appui (20) pour la bordure latérale (R) de l'original à tirer (F), chaque surface d'appui (20) présentant au moins un trou de diaphragme (201, 202) qui laisse passer une partie de la lumière transmise à travers la bordure latérale (R) de l'original à tirer (F).

2. Dispositif de guidage selon la revendication 1, caractérisé par le fait que les moyens de détection comportent une source de lumière (1) qui éclaire de lumière les bordures latérales (R) de l'original à tirer (F) sur lesquelles sont rapportées les informations à détecter (BC1,BC2), ainsi qu'un récepteur (5), disposé de l'autre côté de l'original à tirer (F), pour la lumière transmise à travers la bordure latérale (R) et le trou de diaphragme (201, 202) prévu dans la surface d'appui (20).

3. Dispositif de guidage selon la revendication 1 ou 2, caractérisé par le fait que, sur le trajet des rayons lumineux allant au trou de diaphragme, sont ensuite prévus des moyens optiques (4) qui guident vers le récepteur (5) la lumière passée à travers le trou de diaphragme (201, 202).

4. Dispositif de guidage selon l'une des revendications 1 à 3, caractérisé par le fait que le trou de diaphragme prévu dans la surface d'appui (20) de l'élément de guidage (2) est conçu sous forme d'un trou oblong (201, 202) qui s'étend sensiblement parallèlement à la direction longitudinale de la paroi latérale (21) qui guide l'extrémité latérale (E) de l'original à tirer (F), et que, près du récepteur (5) et avant le récepteur, sur le trajet des rayons lumineux, est disposé un autre diaphragme (6) qui est muni d'une fente (61,62) qui s'étend transversalement par rapport à l'image du trou oblong et laisse ainsi passer, et libère sur le récepteur (5), une partie de la lumière provenant des moyens optiques (4).

5. Dispositif d'éclairage selon la revendication 4, caractérisé par le fait que dans la surface d'appui (20) sont prévus deux trous oblongs (201,202) qui sont orientés parallèlement l'un à l'autre et dont la distance latérale l'un de l'autre correspond à peu près à la distance de deux pistes (BC1,BC2), le long desquelles les informations sont rapportées sur la bordure latérale (R) de l'original à tirer (F), et que le diaphragme (6) est muni, au voisinage du récepteur (5), de deux fentes (61,62) qui sont disposées coaxialement l'une à l'autre, transversalement par rapport à l'image du trou oblong correspondant.

6. Dispositif de guidage selon la revendication 3, caractérisé par le fait que les moyens optiques, qui conduisent au récepteur à la lumière transmise à travers l'original à tirer, sont formés par un guide de la lumière, en particulier par des fibres guides de la lumière ou par des faisceaux (40,41) de fibres guides de la lumière, dont l'extrémité ou les extrémités (400,410) de réception de la lumière sont disposées près de l'original à tirer (F) et dont l'extrémité ou les extrémités (401,411) de sortie de la lumière sont disposées près du récepteur (5).
